# EUROPEAN PATENT APPLICATION

(11) **EP 4 749 430 A1**
(43) Date of publication of application: **27.05.2026**
(21) Application number: 25216009.8
(22) Date of filing: 14.11.2025
(51) Int. Cl.: G06F 8/30, G06F 8/33, G06N 3/0455, G06N 3/0475, G06N 20/00, G06N 3/045, G06N 3/092, G06N 3/096

(54) **POSITIONING IN-CONTEXT DATA IN A LANGUAGE MODEL PROMPT**

(30) Priority: 22.11.2024 US 202418955973
(71) Applicant: Microsoft Technology Licensing, LLC, Redmond, WA 98052 (US)
(72) Inventor: AGARWAL, Anisha, Redmond, Washington 98052 (US); MOHYLEVSKYY, Yevhen, Redmond, Washington 98052 (US); SUNDARESAN, Neelakantan, Redmond, Washington 98052 (US); ZILOUCHIAN MOGHADDAM, Roshanak, Redmond, Washington 98052 (US)
(74) Representative: CMS Cameron McKenna Nabarro Olswang LLP

(57) **Abstract**

The placement of each item of the in-context data of an input to a large language model is determined by a positioning language model trained to learn an access pattern of the large language model. The large language model may access certain items of the in-context data of an input and ignore others. The access pattern of the large language model indicates how the large language model accesses and uses the in-context data of an input given to the large language model. The access pattern is learned from tracking a user's acceptance or rejection of a response to a user query generated by the large language model using a particular ordering of the in-context data.

## Description

### BACKGROUND

A language model is a type of machine learning model trained on various types of data, such as natural language text and source code, to learn to generate natural language text and/or source code. The language model, during training, analyzes a training dataset using statistical and probabilistic techniques to learn to determine the probability of certain words or code elements occurring together. At inference, the language model is given an input which is an input sequence of tokens that the model processes to generate an output. The size of the prompt is limited to the size of the language model's context window.

A context window is the collection of tokens that the language model can access and use in its processing. The context window size for language models varies with some models processing 8K - 128K tokens, such as with OpenAI's GPT-4 models, to 200k tokens for Anthropic's Sonnet 3.5 model. A larger context window size allows the language model to process more data especially when a task uses in-context learning.

In-context learning is a technique where the language model learns a new task without having been trained on the new task. The input to the language model includes few-shot examples of the new task or the input includes context related to the new task. The language model uses the few-shot examples and the related context to learn the new task without requiring additional training.

However, language models are prone to generating unpredictable results since the language model struggles to use the information provided in the input. It is not known how the language model reads the input provided in a context window. This affects the language model's performance and the accuracy of its predictions.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A technique is presented that determines the placement of the data in an input to a large language model. In an aspect, the data in the input includes instructions, a query, and in-context data that includes either a few-shot examples or context related to the query. A language model may use the data in the input differently based on the position of each item in the input. The position of the data affects the accuracy of the model's output. A prompt positioning model is used to determine the best placement of the data in the input based on an access pattern of the large language model. The access pattern indicates how the language model uses data in its input.

In an aspect, the technique is employed in a code development system, such as a code editor or an integrated development system. A user issues a user query during a code edit session or code development session for a large language model to perform a code editing task. The relevant context to the user query is extracted from a workspace of the user. The placement of each item in the prompt is determined by the prompt positioning model having been trained to learn the access pattern of the large language model.

These and other features and advantages will be apparent from a reading of the following detailed description and a review of the associated drawings. It is to be understood that both the foregoing general description and the following detailed description are explanatory only and are not restrictive of aspects as claimed.

### BRIEF DESCRIPTION OF DRAWINGS

Fig. 1 illustrates an exemplary system for positioning the data in an input to a language model.
Fig. 2 is a flow chart illustrating an exemplary method of the system for determining the positions for the data in an input to a language model.
Fig. 3 is a schematic diagram illustrating an exemplary method for training the prompt positioning model through reinforcement learning with human feedback.
Fig. 4 is a block diagram illustrating an exemplary operating environment.
Fig. 5 is a schematic diagram illustrating a request for the prompt positioning model to order the in-context data in a prompt to a particular language model.
Fig. 6 is a schematic diagram illustrating a response from the prompt positioning model indicating an ordering of the in-context data for an input to a language model.

### DETAILED DESCRIPTION

### Overview

The subject matter disclosed pertains to an automated system for determining the placement of the data in an input (e.g., prompt or Application Programming Interface (API) call) to a language model. Language models access and use the data in a long context window differently which affects the results output by the language model. The longer input provides the language model with more information to perform a target task at the expense of increasing the amount of content that the model has to analyze. At times, the processing of the input context decreases the accuracy of the model's output.

In some situations, a model will use data in the input at select positions, such as, at the beginning or at the end of a prompt. Often it is not known ahead-of-time, how a language model will use and access its input data. This issue is due to various reasons, such as, the length of the training data used to train the language model, the type of task performed by the language model, and the configuration of the language model (e.g., encoder-decoder, decoder).

In an aspect, the technique described generates an ordering of the in-context data of the input to a language model during a code editing session. The ordering of the in-context data may determine whether or not a particular in-context data should be included in the prompt.

The in-context data is used to guide a language model, not having been trained on a particular task, to learn the task from the in-context data. A prompt positioning model is trained to learn the access pattern of a large language model in order to generate the best order of the items in the prompt or API call so the language model generates a more productive output.

The language model is then given the inputs and a model response is returned. The user's acceptance and rejection of the model response, in the code editing session, is tracked. The prompt positioning model is then fine-tuned with the accepted and failed model responses in order to improve the accuracy of the prompt positioning model.

Attention now turns to a system, device, and method for determining the placement of the in-context data in a prompt.

### System

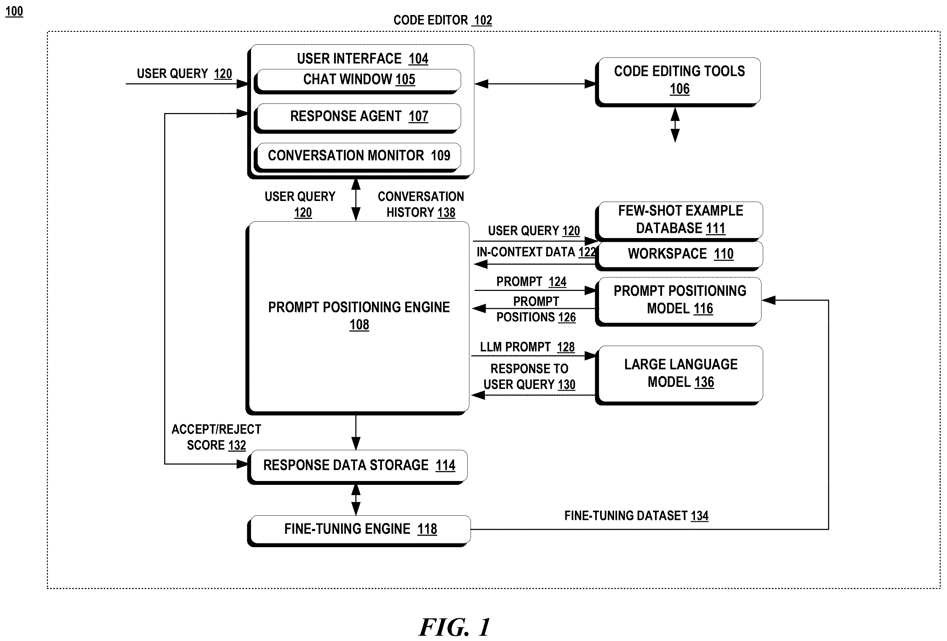

Fig. 1 represents an exemplary system 100 for positioning the in-context data of a prompt. In an aspect, the system 100 is used in a code editor or integrated development environment 102 that provides a framework for the development of source code. The code editor 102 may utilize a large language model to generate source code to complete a partially-formed source code snippet, to generate test cases, to generate repair code for a software bug, vulnerability or performance issue, to generate source code documentation, to detect software bugs, vulnerability or performance issues in a source code snippet, to merge code changes into a code base, to test a software program, and so forth.

In an aspect, the code editor 102 contains a user interface 104, code editing tools 106, a prompt positioning engine 108, a few-shot example database 111, a workspace 110, a prompt positioning model 116, a response data storage 114, one or more language models 136, and a fine-tuning engine 118. The user interface 104 interacts with a user and displays the actions used to perform a target task. The user interface 104 may include a chat window 105, a response agent 107, and a conversation monitor 109.

The chat window 105 is text-based space where a user interacts with a large language model to receive coding-related user queries 120 and to output answers to the user queries. A user may input a user query 120 into the chat window 105 and a model-generated response is displayed in the user interface 104. The user may engage in a conversation with the large language model that includes various questions and answers which are recorded by a conversation monitor 109. The conversation monitor 109 records a conversation history of the user 138 which is provided to the prompt positioning engine 108 as context of the user's intent.

The code editor 102 includes a variety of code editing tools 106 such as compilers, interpreters, parsers, debuggers, editors, build automation tools, publishing tools, profilers, a GUI designer, and the like.

The prompt positioning engine 108 extracts the in-context data 122 from the user's workspace 110 or the few-shot example database 111. The few-shot example database 111 includes examples that demonstrate certain code editing functions. For example, the few-shot example database 111 may include source code illustrating loop unrolling, code refactoring, syntax checking, and the like. The prompt positioning engine 108 generates a prompt 124 to the prompt positioning model 116 for the prompt positioning model 116 to determine the order of each item of the in-context data in a prompt 126 to the large language model. The prompt positioning engine 108 also generates the prompt to the large language model using the model-generated ordering 128 and receives a model-generated response to the user query 130.

The in-context data 122 may include a few-shot examples or retrieval-augmented data obtained from the workspace 110. Few-shot examples demonstrate the target task. The retrieval-augmented data is data from the user's workspace that is related to the user query. In an aspect, the user's workspace 110 is a collection of folders open during a window of a code editing session or code editor instance. Depending on the workflow, multiple folders may be open at one time. In another aspect, the workspace 110 is a code repository or project associated with the user.

The response agent 107 operates in the background of the user interface and determines whether or not a user accepts or rejects a model-generated response. The response agent 107 then stores the user query 120, the ordered in-context data, and the outcome or score, accept or reject, 132 in the response data storage 114.

The fine-tuning engine 118 generates at periodic intervals a fine-tuning dataset 134 from the stored response data 114 to retrain or fine-tune the prompt positioning model 116 on the failed and accepted model responses in order to improve its generated positions.

The code editor 102 uses various language models 116, 136. In an aspect, a language model 116, 136 is a deep learning model. Machine learning pertains to the use and development of computer systems that are able to learn and adapt without following explicit instructions by using algorithms and statistical models to analyze and draw inferences from patterns in data. Machine learning uses different types of statistical methods to learn from data and to predict future decisions. Traditional machine learning includes classification models, data mining, Bayesian networks, Markov models, clustering, and visual data mapping.

Deep learning differs from traditional machine learning since it uses multiple stages of data processing through many hidden layers of a neural network to learn and interpret the features and the relationships between the features. Deep learning embodies neural networks which differs from the traditional machine learning techniques that do not use neural networks.

Neural transformers models are one type of deep learning model that utilize an attention mechanism. Attention directs the neural network to focus on a subset of features or tokens in an input sequence thereby learning different representations from the different positions of the tokens in an input sequence. The neural transformer model handles dependencies between its input and output with attention and without using recurrent neural networks (RNN) (e.g., long short-term memory (LSTM) network) and convolutional neural networks (CNN).

Examples of a language model include the encoder and generative neural transformer models with attention (i.e., encoder-decoder, decoder) offered by OpenAI (i.e., ChatGPT, GPT 4, GPT 4o, and Codex models), PaLM, Chinchilla, and the Bidirectional Encoder Representations from Transformers (BERT) offered by Google, the Gemini multimodal models of Google, LLaMa by Meta, Anthropic's Sonnet models, and the phi-3 models offered by Microsoft.

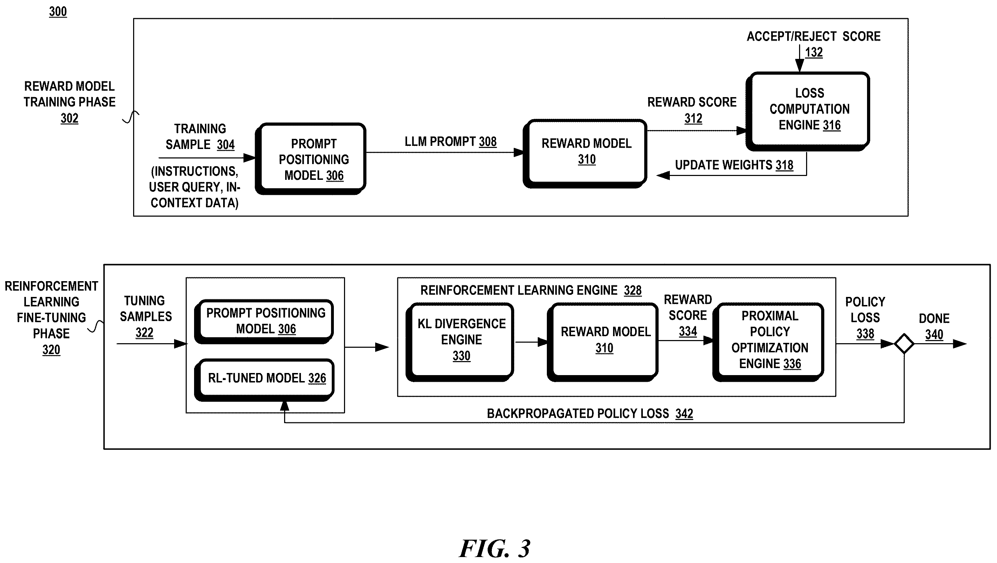

In an aspect, the prompt positioning model 116 is a generative neural transformer model with attention trained to predict how the large language model will access and utilize the data inside a prompt to the large language model. In an aspect, the prompt positioning model is a smaller model that is local to the user device or code editor. The training of the prompt positioning model is explained in further detail below with respect to Fig. 3.

In an aspect, the large language model 136 is a generative neural transformer model with attention (e.g., encoder-decoder, decoder). The large language model 136 is hosted on an external server and accessed over a network through application programming interfaces (API). The prompt to the large language model may be issued through HTTP-based Representational State Transfer (REST) APIs. A REST API or web API is an API that conforms to the REST protocol. In the REST protocol, the remote server hosting the large language model contains a publicly-exposed endpoint having a defined request and response structure. The prompt positioning engine issues web APIs containing the prompt to the remote server to instruct the large language model to perform the intended task given the prompt.

The training of a language model requires a considerable amount of training data and computing resources. The large language model is often more costly to access and is extensively trained on a large amount data increasing the size of the model to contain billions of parameters. The prompt positioning model is trained for a particular task and its size is smaller than the large language model. The cost to access the prompt positioning model is considerably less than the large language model. The size of the prompt positioning model is smaller than the large language model making it desirable to operate in the same computing device as the code editor thereby reducing the expense and computing resources of the positioning technique.

### Methods.

Attention now turns to a description of the various exemplary methods that utilize the system and devices disclosed herein. Operations for the aspects may be further described with reference to various exemplary methods. It may be appreciated that the representative methods do not necessarily have to be executed in the order presented, or in any particular order, unless otherwise indicated. Moreover, various activities described with respect to the methods can be executed in serial or parallel fashion, or any combination of serial and parallel operations. In one or more aspects, the method illustrates operations for the systems and devices disclosed herein.

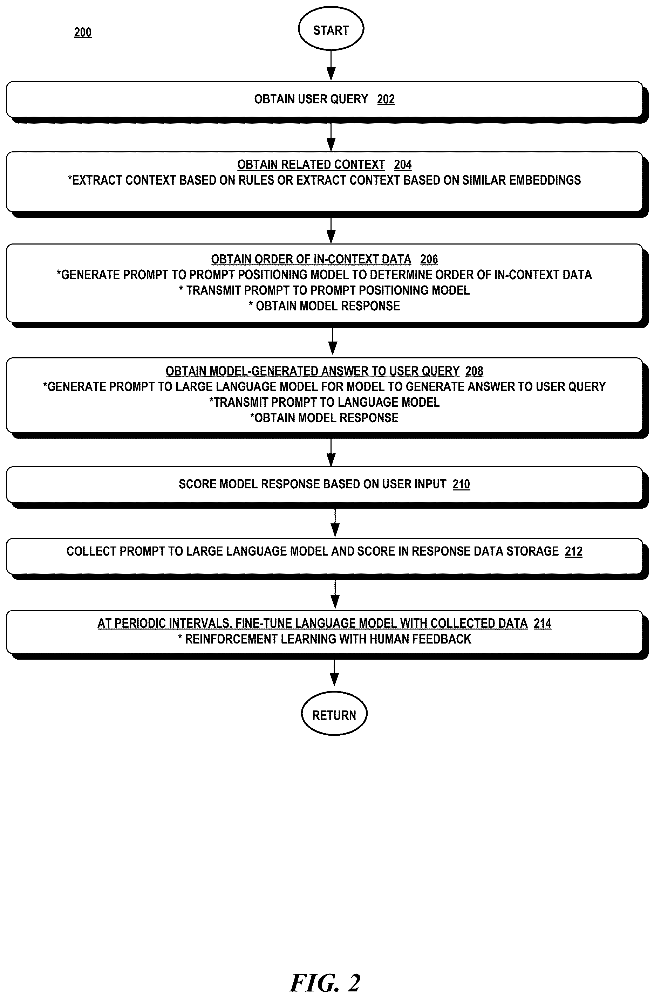

Turning to Fig. 2, there is shown an exemplary method of the in-context data positioning system 200. In an aspect, the method is performed within a code editing session of a source code program under development (e.g., Visual Studio Code^{®}, Visual Studio^{®}). However, it should be noted that the method described herein is not limited to a code editing session and may be employed in other applications that utilize in-context data in prompts.

The method begins with a user initiating a user query to the code editor 102 to have a large language model 136 perform a task (block 202). The user query 120 can be input into the chat window 105 and may be part of an existing or new conversation with a chatbot that interacts with the user and the large language model. The conversation history of the user and the large language model is tracked by the conversation monitor 109 in a background process of the user interface 104. The conversation history 138 contains the interactions of the user and the large language model within the code editor prior to the user initiating the user query.

In an aspect, the user query 120 is related to the source code that the user is working on in a code editing session. The prompt positioning engine 108 obtains the context of the user's query from the user's workspace (block 204). The user's workspace 110 may include files open in the code editor. For example, in Microsoft's VS Code, the workspace includes the root folder of a project and the files therein.

Alternatively, the user query may be related to a particular task. The prompt positioning engine 108 obtains a few-shot examples of the task from the few-shot example database 111 as the related context.

There are various methods for extracting the context of the user's query. In one aspect, the user query is parsed for references to functions (i.e., methods). Source code that invokes these functions and that define these functions are extracted as related context. Source code that is highlighted in the source code editor is extracted as related context. Files that are referenced in the user query are extracted as related context. Files that are open in the code editor and the contents of the console input buffer may also be extracted as related content. The conversation history may also be included as related context.

Additionally, the project or code repository of the user may be indexed by the embedding of each function within the project or code repository. A search is made of the project or code repository using an embedding of the user query to find the most similar embeddings to the user query in the project or code repository. An embedding or encoding is a real-valued vector of a token or word that encodes a meaning of the token or word so that words or tokens similar in meaning have close encodings. The embedding is generated by an encoder, such as a neural encoder transformer model with attention.

The prompt positioning engine 108 extracts the in-context data from the workspace and/or few-shot example database 111 and generates a prompt 124 to the prompt positioning model 116 to determine the order of the items of the in-context data (block 206). The prompt includes instructions for the prompt positioning model 116 to generate the ordering based on how the large language model uses the in-context data.

Various models access the data in a prompt differently. Some models may use the in-context data that appears in the beginning of the prompt and at the tail end of the prompt while ignoring the data in the middle. Other models may utilize all of the in-context data. The prompt positioning model is trained to learn how the large language model uses its data based on whether or not the model response is accepted or rejected by the user. The prompt includes instructions to the model, the user query, and the in-context data.

Next, the prompt positioning engine generates a prompt for the large language model to answer the user query (block 208). The prompt includes instructions, the user query, and the in-context data in the model-generated order. The instructions inform the large language the task that is to be performed by the large language model, a description of the in-context data and its use by the model and the format of the output. The prompt is input to the large language model and the language model returns to the prompt positioning engine a response to the user query (block 208). The model response is displayed in the user interface (block 208).

The response agent 107 monitors the user interface to see if the user accepts or rejects the model response 132 (block 210). In some instances, the model response is source code or code documentation that the user may incorporate into a source code program. The response agent generates a score 132 based on the user's interaction with the model response (block 210). The score indicates whether or not the user used the model response. In some instances, the score is a bit value where '1'b represents acceptance and '0'b represents rejection.

The response agent 107 stores the prompt to the large language model and its score is stored in the response data storage 114 (block 212). The collected data is then used to fine-tune the prompt positioning model so the prompt positioning model learns how the large language model uses its input.

In an aspect, the prompt positioning model is initially trained to learn to generate source code by analyzing the patterns in source code training samples. In an aspect, the model is trained using a masked language objective where tokens in a source code training sample are masked out so the model learns to predict the token that replaces the masked token. In this manner, the prompt positioning model learns to generate source code.

Thereafter the prompt positioning model is fine-tuned using reinforcement learning with human feedback (block 214). Reinforcement learning is a technique that uses a system of rewards and penalties to train a deep learning model to learn to solve a problem by itself. Reinforcement learning differs from supervised learning and unsupervised learning. In supervised learning, a model learns from a training dataset of labeled examples. Each sample in the training dataset contains a correct action that the model should take. The model learns to generalize its actions in order to act in situations not present in the training dataset. In unsupervised learning, the model learns to find patterns or structure hidden in the training dataset of unlabeled data. By contrast, reinforcement learning maximizes a reward gradually observed on its outputs during its training instead of trying to find hidden patterns and structure in the unlabeled training dataset.

The reward-based learning method differs from traditional training methods that optimize a maximum-likelihood loss or cost function (e.g., cross entropy loss). Instead, the reward-based learning method maximizes a specific, potentially discrete, non-differentiable reward instead of optimizing a maximum-likelihood loss function. The reward tells the neural network which action is wrong and which action is correct in order to learn to take actions that generate better results.

In reinforcement learning, an actor interacts over time with its environment to achieve a goal and learns the actions that produce the most reward by trying them. The actor (e.g., language model being tuned) observes the current state of the environment to decide which action to take (e.g., prediction of next token in an output). The environment changes state and produces a reward for that action. The reward indicates whether the action was good or bad using the static code quality properties. A higher reward is given for an action that produces quality-generated source code. A penalty is imposed when the action is bad. The cycle of observation, action, and reward is repeated until the learning is complete.

The actor uses a function or policy that maps the inputs into the actions or outputs. The environment uses the reward as feedback on the action. The goal of the reinforcement learning phase is for the model to learn the optimal policy that maps a large set of observations into a set of actions that control the environment.

Proximal policy optimization ("PPO") is a reinforcement learning technique that optimizes a surrogate objective function for performing stochastic gradient descent. A surrogate objective is one that approximates another objective or function. Surrogate optimization is used for time-consuming objective functions by taking a few evaluations in order to generate a good solution readily. This is also beneficial when there is limited tuning data for a target task.

In PPO, a policy gradient is computed to tune the parameters of the language model. The goal of PPO is to limit large policy updates during tuning in order to avoid degrading the policy. In one aspect, the policy gradient is computed as a function of a clipped surrogate objective and a value function error term. The clipped surrogate objective minimizes the gradient to a lower bound so that the gradient updates are small. The value function is used by the model to estimate the reward for its own predictions. The value function error term is used to improve the estimation of value function, such that it can more accurately estimate the rewards for its predictions and, in turn, the model can generate predictions that maximize such reward.

Turning to Fig. 3, there is shown an exemplary method for fine-tuning the prompt positioning model 300 through reinforcement learning with human feedback (block 214). In an aspect, a reward model is trained that embodies the human preferences (i.e., accept or reject scores) in a reward model training phase 302 and a reinforcement learning fine-tuning phase 320 is used to optimize or fine-tune the prompt positioning model to learn to predict better orderings based on the acceptance and rejection of output generated by the large language model.

In the reward model training phase 302, the reward model 310 is trained to learn to predict a reward score that indicates the quality of the ordering of the in-context data. The reward model 310 is trained on the ordering of the in-context data 308 generated by the prompt positioning model 306 given a training sample 304. The training sample is a prompt consisting of instructions, a user query, and in-context data. The accept/reject score 312 associated with the training sample is used as the human feedback. The reward model 310 generates a reward score 312. The loss computation engine 316 computes the difference between the positioning reward score 312 and the accept/reject score 132 which is then used to update the weights 318 of the reward model 310.

In the reinforcement learning fine-tuning phase 320, the prompt positioning model 306, is optimized or fine-tuned through reinforcement learning to learn to predict better-quality orderings. The reinforcement learning model, RL-Tuned Model 326, is initialized with the parameters of the prompt positioning model 324. A set of fine-tuning samples 132 is collected and input into both the prompt positioning model 306 and the current state of the RL-Tuned Model 326.

The distributions output from each of these models is then analyzed by the reinforcement learning engine 328. A KL-divergence engine 330 computes the difference between the two output distributions. The reward model 310 generates an adjusted reward score 334 which is based on the accept/reject score. The adjusted reward score 334 is then used by the PPO engine 336 to generate a policy loss 338 that is backpropagated 342 to update the parameters of RL-Tuned Model 326. When the model training is completed 340, the RL-Tuned Model 326 is deployed in an inference system as the prompt positioning model.

### Exemplary Illustration

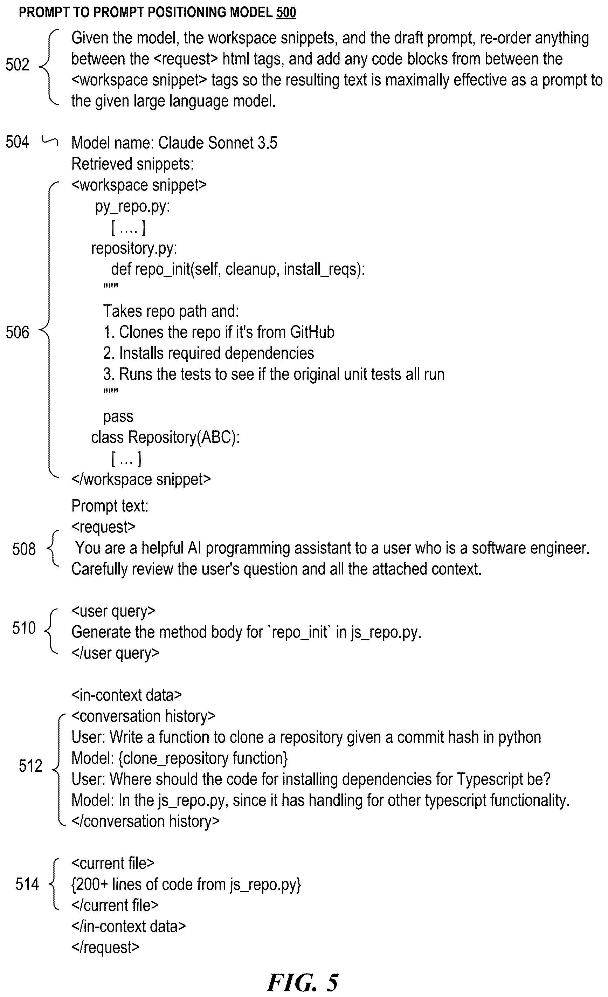

Attention now turns to Fig. 5 which illustrates an exemplary prompt or input 500 to the prompt positioning model for the prompt positioning model to generate an order for the data of a prompt to a large language model 504 named "Claude Sonnet 3.5." In this example, the prompt positioning model is given instructions 502, code from the user's workspace that consists of py _repo.py, repository.py, and the class Repository (ABC) 506, instructions for the large language model 508, a user query 510, a conversation history 512, and the current file opened in a code editor 514.

The instructions to the prompt positioning model 502 indicate that the prompt positioning model should reorder the data between the <request> and </request> html tags and to add any of the code from the user's workspace (i.e., py_repo.py, repository.py, and the class Repository (ABC)) 506 that would generate a maximally-effective prompt to the large language model named "Claude Sonnet 3.5."

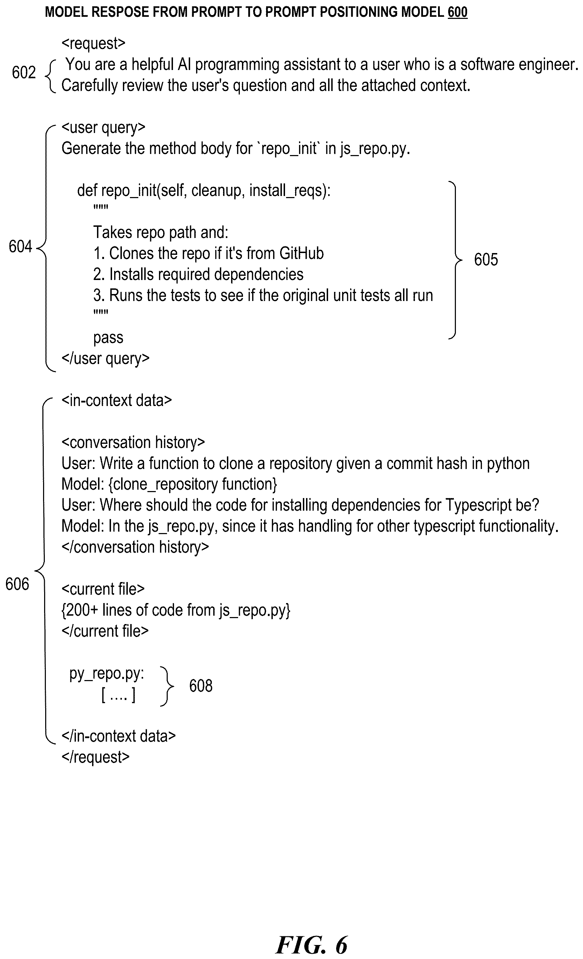

Fig. 6 illustrates an exemplary response from the prompt positioning model 600 given the input shown in Fig. 5. The prompt positioning model placed the function repository.py 605 into the user query 604 and added the function py_repo.py 608 to the end of the prompt. The prompt positioning model did not use the class Repository (ABC). The response generated by the prompt positioning model 600 is the prompt to the large language model.

The prompt 600 includes the following data in the following order: instructions to the large language model 602, the user query 604 including the function repository.py 605, and the in-context data 606. The in-context data 606 includes the conversation history, the current file that is open in the code editor, and the source code file py_repo.py. The prompt positioning model did not include the code for class Repository (ABC) since the prompt positioning model did not consider that file relevant or necessary for the task at hand.

### Exemplary Operating Environment

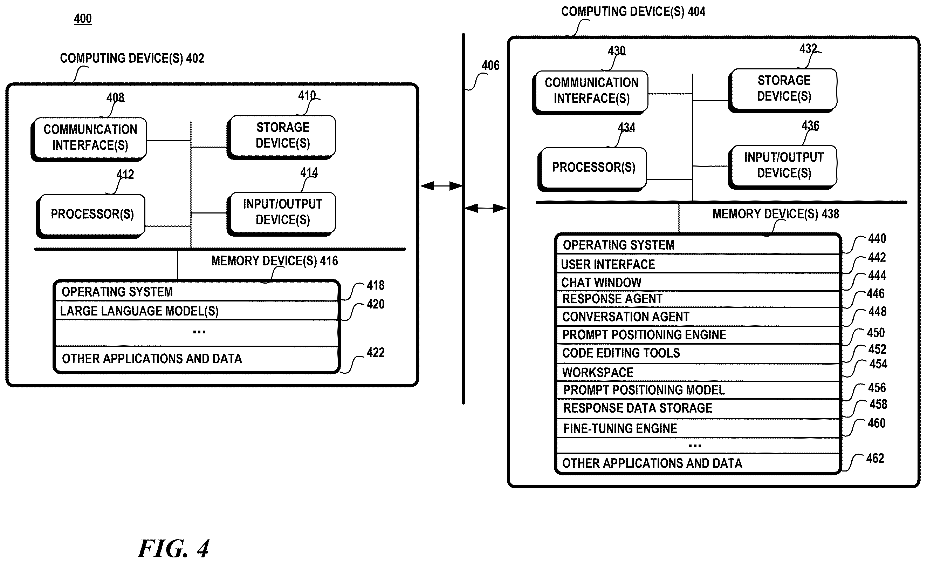

Attention now turns to a discussion of an exemplary operating environment. Fig. 4 illustrates an exemplary operating environment 400 in which one or more computing devices 402 are used to host the code editor and the code editing session. One or more computing devices 404 are used to host the large language model. However, it should be noted that the aspects disclosed herein are not constrained to any particular configuration of devices. In another aspect, a single computing device may host the large language model and the code editor.

A computing device 402, 404 may be any type of electronic device, such as, without limitation, a mobile device, a personal digital assistant, a mobile computing device, a smart phone, a cellular telephone, a handheld computer, a server, a server array or server farm, a web server, a network server, a blade server, an Internet server, a work station, a mini-computer, a mainframe computer, a supercomputer, a network appliance, a web appliance, a distributed computing system, multiprocessor systems, or combination thereof. The operating environment 400 may be configured in a network environment, a distributed environment, a multi-processor environment, or a stand-alone computing device having access to remote or local storage devices.

The computing device 402, 404 may include one or more processors 412, 434, one or more communication interfaces 408, 430, one or more hardware storage devices 410, 432, one or more input/output devices 414, 436, and one or more memory devices 416, 438. A processor 412, 434 may be any commercially available or customized processor and may include dual microprocessors and multi-processor architectures. A communication interface 408, 430 facilitates wired or wireless communications between the computing device 402, 404 and other devices. A hardware storage device 410, 432 may be a computer-readable medium that does not contain propagating signals, such as modulated data signals transmitted through a carrier wave. Examples of a hardware storage device 410, 432 include without limitation RAM, ROM, EEPROM, flash memory or other memory technology, CD-ROM, digital versatile disks (DVD), or other optical storage, magnetic cassettes, magnetic tape, magnetic disk storage, all of which do not contain propagating signals, such as modulated data signals transmitted through a carrier wave. There may be multiple hardware storage devices 410, 432 in a computing device 402, 404. The input/output devices 414, 436 may include a keyboard, mouse, pen, voice input device, touch input device, display, speakers, printers, etc., and any combination thereof.

A memory device or memory 416, 438 may be any non-transitory computer-readable storage media that may store executable procedures, applications, and data. The computer-readable storage media does not pertain to propagated signals, such as modulated data signals transmitted through a carrier wave. It may be any type of non-transitory memory device (e.g., random access memory, read-only memory, etc.), magnetic storage, volatile storage, non-volatile storage, optical storage, DVD, CD, floppy disk drive, etc. that does not pertain to propagated signals, such as modulated data signals transmitted through a carrier wave. A memory device 416, 438 may also include one or more external hardware storage devices or remotely located hardware storage devices that do not pertain to propagated signals, such as modulated data signals transmitted through a carrier wave.

The memory device 416, 438 may contain instructions, components, and data. A component is a software program that performs a specific function and is otherwise known as a module, program, component, and/or application. The memory device 416 may include an operating system 418, one or more large language models 420, and other applications and data 422. The memory device 438 may include an operating system 440, a user interface 442, a chat window 444, a response agent 446, a conversation agent 448, a prompt positioning engine 450, code editing tools 452, a workspace 454, a prompt positioning model 456, a response data storage 458, a fine-tuning engine 460, and other applications and data 462.

A computing device 402 may be communicatively coupled via a network 406. The network 406 may be configured as an ad hoc network, an intranet, an extranet, a virtual private network (VPN), a local area network (LAN), a wireless LAN (WLAN), a wide area network (WAN), a wireless WAN (WWAN), a metropolitan network (MAN), the Internet, a portions of the Public Switched Telephone Network (PSTN), plain old telephone service (POTS) network, a wireless network, a WiFi^{®} network, or any other type of network or combination of networks.

The network 406 may employ a variety of wired and/or wireless communication protocols and/or technologies. Various generations of different communication protocols and/or technologies that may be employed by a network may include, without limitation, Global System for Mobile Communication (GSM), General Packet Radio Services (GPRS), Enhanced Data GSM Environment (EDGE), Code Division Multiple Access (CDMA), Wideband Code Division Multiple Access (W-CDMA), Code Division Multiple Access 2000, (CDMA-2000), High Speed Downlink Packet Access (HSDPA), Long Term Evolution (LTE), Universal Mobile Telecommunications System (UMTS), Evolution-Data Optimized (Ev-DO), Worldwide Interoperability for Microwave Access (WiMax), Time Division Multiple Access (TDMA), Orthogonal Frequency Division Multiplexing (OFDM), Ultra Wide Band (UWB), Wireless Application Protocol (WAP), User Datagram Protocol (UDP), Transmission Control Protocol/ Internet Protocol (TCP/IP), any portion of the Open Systems Interconnection (OSI) model protocols, Session Initiated Protocol/ Real-Time Transport Protocol (SIP/RTP), Short Message Service (SMS), Multimedia Messaging Service (MMS), or any other communication protocols and/or technologies.

### Technical Effect

Aspects of the subject matter disclosed herein pertain to the technical problem of determining the positions of the in-context data in a prompt to a language model. The technical features associated with addressing this problem is the extraction of the relevant in-context data and identifying the placement of each in-context item in a prompt. The technical effect achieved is the construction of a prompt based on how the language model accesses its input data which improves the accuracy of the model's output.

The technique disclosed herein is advantageous over prior solutions that randomly placed a large amount of in-context data in a prompt or which placed more relevant in-context data in the beginning or at the end of the prompt assuming that the in-context data in the middle would not be used by the language model. The prior solutions resulted in substantial information loss that produced sub-optimal model responses.

Although the context window size of machine learning models increases, it does not do so at a rate that matches the pace of the size of the user requests. Programmers can ask the model to generate full code files, entire test suites, page-long repository descriptions, and more. The need for a flexible, adaptable, inexpensive solution continues to increase. The technique described herein requires two additional calls to the language model for each user query.

One of ordinary skill in the art understands that the technical effects are the purpose of a technical embodiment. The mere fact that a calculation is involved in an embodiment does not remove the presence of the technical effects or alter the concrete and technical nature of the embodiments. Operations used to determine the repositioning of the in-context data in the manner disclosed is understood herein as inherently digital. The human mind cannot interface directly with a CPU or network interface card, or other processor, or with RAM or other digital storage, to read or write the necessary data and perform the necessary operations on digital values in the manner disclosed herein.

The embodiments are also presumed to be capable of operating at scale, within tight timing constraints in production environments, or in testing labs for production environments as opposed to being mere thought experiments.

### Conclusion

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims. For example, the techniques disclosed herein may be applied to any data included in an input to a large language model and is not limited to ordering the in-context data. Additionally, the prompt positioning model may rank the in-context data according to its relevance to a user query and decide whether or not to include an item of the in-context data into the prompt to the large language model.

In an example, the placement of each item of the in-context data of an input to a large language model is determined by a positioning language model trained to learn an access pattern of the large language model. The large language model may access certain items of the in-context data of an input and ignore others. The access pattern of the large language model indicates how the large language model accesses and uses the in-context data of an input given to the large language model. The access pattern is learned from tracking a user's acceptance or rejection of a response to a user query generated by the large language model using a particular ordering of the in-context data.

It may be appreciated that the representative methods do not necessarily have to be executed in the order presented, or in any particular order, unless otherwise indicated. Moreover, various activities described with respect to the methods can be executed in serial or parallel fashion, or any combination of serial and parallel operations. In one or more aspects, the method illustrates operations for the systems and devices disclosed herein.

A system is disclosed comprising: a processor; and a memory that stores a program that is configured to be executed by the processor. The program comprises instructions to perform acts that: obtain a user query to perform a task in a code development session; obtain a plurality of in-context data related to the user query from a user workspace; generate an order for positioning each of the plurality of in-context data in an input to a first language model, wherein the order is generated from a positioning language model, wherein the positioning language model is given the user query and the plurality of in-context data and generates the order based on an access pattern of the first language model, wherein the first language model and the positioning language model differ; construct the input to the first language model, wherein the input to the first language model comprises the user query and the plurality of in-context data in the order generated from the positioning language model; invoke the first language model with the input to generate a response to the user query; and output in the code development session the response generated by the first language model.

In an aspect, the program comprises instructions to perform acts that: detect user input, in the code development session, indicating acceptance or rejection of the response generated by the first language model; and generate a score for the response generated by the first language model that represents user acceptance or user rejection of the response generated by the first language model.

In an aspect, the program comprises instructions to perform acts that: generate a fine-tuning dataset comprising a plurality of training samples, wherein a training sample comprises the input to the first language model, the response generated by the first language model, and a score.

In an aspect, the program comprises instructions to perform acts that: facilitate fine-tuning of the positioning language model with the fine-tuning dataset using reinforcement learning with human feedback, wherein the human feedback is the score.

In an aspect, the program comprises instructions to perform acts that: obtain the plurality of in-context data from the user workspace opened during the code development session.

In an aspect, the program comprises instructions to perform acts that: generate an embedding of the user query; generate an embedding for each function residing in the user workspace; extract the plurality of in-context data from functions residing in the user workspace having an embedding similar to the embedding of the user query.

In an aspect, the program comprises instructions to perform acts that: obtain a conversation history from the code development session; and appending the conversation history of the code development session to the plurality of in-context data.

A computer-implemented method is disclosed comprising: detecting, in a code editing session, a user query to perform a task; extracting a plurality of in-context data related to the user query from a user workspace; generating an order for positioning each of the plurality of in-context data in an input to a large language model, wherein the order is generated from a positioning language model, wherein the positioning language model is given the user query and the plurality of in-context data and generates the order based on an access pattern of the large language model; constructing the input to the large language model, wherein the input to the large language model comprises the user query and the plurality of in-context data in the order generated by the large language model; invoking the large language model given the input to generate a response to the user query; and presenting, in a user interface of the code editing session, the response generated by the large language model.

In an aspect, the access pattern of the large language model is based on how the large language model uses input data to the large language model.

In an aspect, the positioning language model learns the access pattern of the large language model based on user input accepting or rejecting the response generated by the large language model.

In an aspect, the computer-implemented method further comprises: tracking user acceptance or rejection of the response generated by the large language model in the code editing session; and generating a score for the response generated by the large language model, wherein the score represents acceptance or rejection of the response generated by the large language model.

In an aspect, the computer-implemented method further comprises: causing fine-tuning of the positioning language model with the tracked acceptances and rejections of the responses generated by the large language model, wherein the fine-tuning comprises a plurality of training samples, wherein a training sample comprises a select user query, an input to the large language model for the select user query, the response generated by the large language model for the select prompt, and a score of the response generated by the large language model.

In an aspect, the fine-tuning comprises reinforcement learning with human feedback, wherein the human feedback is the score.

In an aspect, the computer-implemented method further comprises: generating an embedding of the user query; generating an embedding for each function residing in the user workspace open during the code editing session; and extracting the plurality of in-context data from the functions residing in the user workspace having an embedding similar to the embedding of the user query.

In an aspect, the computer-implemented method further comprises: extracting the plurality of in-context data from few-shot examples demonstrating the task.

A hardware storage device is disclosed having stored thereon computer executable instructions that are structured to be executable by a processor of a computing device to thereby cause the computing device to perform actions that: provide in a code editor, access to a large language model to perform a code editing task; obtain a user query in the code editor for the large language model to perform a target code editing task; extract a plurality of in-context data related to the user query from a user workspace; obtain from a positioning neural model, an order of each item of the plurality of the in-context data for placement into an input to the large language model, wherein the positioning neural model is trained to learn an access pattern of inputs to the large language model, wherein the access pattern indicates positions of data in an input used by the large language model; construct a target input to the large language model to perform the target code editing task, wherein the target input comprises the user query and the extracted in-context data in the order generated by the positioning neural model; invoke the large language model with the target input; receive a response from the large language model for the target input; and output the response from the large language model in the code editor.

In an aspect, the hardware storage device has stored thereon computer executable instructions that are structured to be executable by a processor of a computing device to thereby cause the computing device to perform actions that: track rejection of the response generated by the large language model in the code editor; generate a fine-tuning sample from the response generated by the large language model that was rejected; and fine-tune the positioning neural model with the fine-tuning sample.

In an aspect, the positioning neural model is fine-tuned through reinforcement learning with human feedback.

In an aspect, the hardware storage device has stored thereon computer executable instructions that are structured to be executable by a processor of a computing device to thereby cause the computing device to perform actions that: extract one or more few-shot examples as items of the plurality of in-context data.

In an aspect, the hardware storage device has stored thereon computer executable instructions that are structured to be executable by a processor of a computing device to thereby cause the computing device to perform actions that: extract, as an item for the plurality of in-context data, functions referenced in the user query, files referenced in the user query, files opened in the code editor, a conversation history of the code editor or source code highlighted in the code editor.

## Claims

1. A system comprising:
a processor; and
a memory that stores a program that is configured to be executed by the processor, wherein the program comprises instructions to perform acts that:
obtain (202) a user query (120) to perform a task in a code development session;
obtain (204) a plurality of in-context data (122) related to the user query from a user workspace (110);
generate (206) an order (126) for positioning each of the plurality of in-context data in an input to a first language model (136), wherein the order is generated from a positioning language model (116), wherein the positioning language model is given the user query and the plurality of in-context data and generates the order based on an access pattern of the first language model, wherein the first language model and the positioning language model differ;
construct the input (128) to the first language model, wherein the input to the first language model comprises the user query and the plurality of in-context data in the order generated from the positioning language model;
invoke (208) the first language model with the input to generate a response (130) to the user query; and
output in the code development session the response generated by the first language model.

2. The system of claim 1, wherein the program comprises instructions to perform acts that:
detect user input, in the code development session, indicating acceptance or rejection of the response generated by the first language model; and
generate (210) a score (132) for the response generated by the first language model that represents user acceptance or user rejection of the response generated by the first language model.

3. The system of claim 2, wherein the program comprises instructions to perform acts that:
generate (212) a fine-tuning dataset (134) comprising a plurality of training samples, wherein a training sample comprises the input to the first language model, the response generated by the first language model, and a score.

4. The system of claim 3, wherein the program comprises instructions to perform acts that:
facilitate (214) fine-tuning of the positioning language model with the fine-tuning dataset using reinforcement learning with human feedback, wherein the human feedback is the score.

5. The system of any previous claim, wherein the program comprises instructions to perform acts that:
obtain the plurality of in-context data from the user workspace opened during the code development session.

6. The system of any previous claim, wherein the program comprises instructions to perform acts that:
generate an embedding of the user query;
generate an embedding for each function residing in the user workspace;
extract the plurality of in-context data from functions residing in the user workspace having an embedding similar to the embedding of the user query.

7. The system of any previous claim, wherein the program comprises instructions to perform acts that:
obtain a conversation history from the code development session; and
appending the conversation history of the code development session to the plurality of in-context data.

8. A computer-implemented method comprising:
detecting, in a code editing session, a user query (120) to perform a task;
extracting (204) a plurality of in-context data related to the user query from a user workspace (110);
generating (206) an order (126) for positioning each of the plurality of in-context data in an input to a large language model (136), wherein the order is generated from a positioning language model (116), wherein the positioning language model is given the user query and the plurality of in-context data and generates the order based on an access pattern of the large language model;
constructing the input (128) to the large language model, wherein the input to the large language model comprises the user query and the plurality of in-context data in the order generated by the large language model;
invoking (208) the large language model given the input to generate a response (130) to the user query; and
presenting, in a user interface of the code editing session, the response generated by the large language model.

9. The computer-implemented method of claim 8, wherein the access pattern of the large language model is based on how the large language model uses input data to the large language model.

10. The computer-implemented method of claim 9, wherein the positioning language model learns the access pattern of the large language model based on user input accepting or rejecting the response generated by the large language model.

11. The computer-implemented method of claim 8 or claim 9, further comprising:
tracking user acceptance or rejection of the response generated by the large language model in the code editing session; and
generating (210) a score (132) for the response generated by the large language model, wherein the score represents acceptance or rejection of the response generated by the large language model.

12. The computer-implemented method of claim 11, further comprising:
causing fine-tuning (214) of the positioning language model with the tracked acceptances and rejections of the responses generated by the large language model, wherein the fine-tuning (134) comprises a plurality of training samples, wherein a training sample comprises a select user query, an input to the large language model for the select user query, the response generated by the large language model for the select prompt, and a score of the response generated by the large language model.

13. The computer-implemented method of claim 12, wherein the fine-tuning comprises reinforcement learning with human feedback, wherein the human feedback is the score.

14. The computer-implemented method of any of claims 8 to 13, further comprising:
generating an embedding of the user query;
generating an embedding for each function residing in the user workspace open during the code editing session; and
extracting the plurality of in-context data from the functions residing in the user workspace having an embedding similar to the embedding of the user query.

15. The computer-implemented method of any of claims 8 to 14, further comprising:
extracting the plurality of in-context data from few-shot examples demonstrating the task.
